# EUROPÄISCHE PATENTSCHRIFT

(11) **EP 0 812 387 B1**
(45) Veröffentlichungstag und Bekanntmachung des Hinweises auf die Patenterteilung: **06.03.2002**
(21) Anmeldenummer: 96933313.7
(22) Anmeldetag: 06.08.1996
(51) Int. Cl.: F02M 37/10, F02M 37/18

(54) **EINRICHTUNG ZUM FÖRDERN VON KRAFTSTOFF AUS EINEM VORRATSTOPF ZUR BRENNKRAFTMASCHINE EINES KRAFTFAHRZEUGES**
DEVICE FOR SUPPLYING FUEL FROM A FEED RESERVOIR TO THE COMBUSTION ENGINE OF AN AUTOMOBILE
DISPOSITIF SERVANT A AMENER DU CARBURANT A PARTIR D'UNE RESERVE JUSQU'AU MOTEUR A COMBUSTION INTERNE D'UNE AUTOMOBILE

(30) Priorität: 30.12.1995 DE 19549192
(43) Veröffentlichungstag der Anmeldung: 17.12.1997
(73) Patentinhaber: ROBERT BOSCH GMBH, 70442 Stuttgart (DE)
(72) Erfinder: KLEPPNER, Stephan, D-75015 Bretten (DE)
(86) Internationale Anmeldenummer: DE9601460
(87) Internationale Veröffentlichungsnummer: WO9724524

(56) Entgegenhaltungen:
- EP-A- 0 459 556
- DE-A- 4 123 367
- US-A- 4 397 333
- US-A- 4 750 522

## Beschreibung

### Stand der Technik

Die Erfindung betrifft eine Einrichtung zum Fördern von Kraftstoff nach der Gattung des Hauptanspruchs.

Bei Fördereinrichtungen gemäß der DE 42 24 981 A1 soll mit Hilfe der Strahlpumpe für eine ausreichende Füllung eines Vorratstopfes gesorgt werden, in welchem das Förderaggregat angeordnet ist und aus dem der Kraftstoff zur Brennkraftmaschine gefördert wird. Dadurch soll auch bei relativ leerem Kraftstofftank dem Förderaggregat ein Kraftstoffvorrat bereitgestellt werden, der sicherstellt, daß dann beispielsweise auch längere Steigungen ohne Probleme überwunden werden können. Zur Befüllung des Vorratstopfes ist im unteren Bereich nahe dem Tankboden ein Mischbereich vorgesehen, durch den sowohl frischer Kraftstoff aus dem Kraftstofftank als auch von der Brennkraftmaschine zurückgeführter Kraftstoff über eine Saugstrahlpumpe dem Vorratstopf zugeführt wird. In dem Mischbereich ist nahe der Strahlpumpe eine Öffnung vorgesehen, über die frischer Kraftstoff in den Mischbereich eintreten kann. Damit nach Abschalten der Brennkraftmaschine und somit des Förderaggregates ein Leerlaufen des Vorratstopfes verhindert werden kann, weist diese Öffnung ein Schließelement in Form einer Klappe oder einer Ventilplatte auf, die sich dann öffnet, wenn die Brennkraftmaschine in Betrieb ist und die Strahlpumpe zurückgeführten Kraftstoff in den Mischbereich einleitet. Diese Anordnung weist jedoch den Nachteil auf, daß eine aufwendige Anordnung zum Schließen der Öffnung vorgesehen ist, die zudem einen hohen Platzbedarf erfordert. Desweiteren können derartige Schließelemente, die am Eingang des Mischbereiches angeordnet sind, die Öffnung nicht dicht abschließen, so daß insbesondere nach längerem Nichtgebrauch der Brennkraftmaschine in schiefer Lage kein Start möglich ist.

Durch die US-A-4 397 333 ist eine Einrichtung zum Fördern von Kraftstoff aus einem Vorratstank zur Brennkraftmaschine eines Kraftfahrzeugs bekannt, mit einem saugseitig mit dem Vorratstank und druckseitig mit der Brennkraftmaschine verbundenen Förderaggregat. Es ist eine Rückführleitung vorhanden, die zu einer nahe dem Boden des Vorratstanks angeordneten Strahlpumpe führt, die den Kraftstoffüberschuß über einen Mischbereich in einen Vorratstopf fördert, aus welchem das Förderaggregat Kraftstoff entnimmt. Die Strahlpumpe fördert dabei Kraftstoff über eine Leitung in den Vorratstopf, wobei die Leitung durch eine seitliche Öffnung in den Vorratstopf ragt und der im Vorratstopf liegende Endbereich der Leitung höher angeordnet ist als die Strahlpumpe. Hierdurch wird ein vollständiges Leerlaufen des Vorratstopfs bei leerem Vorratstank vermieden, jedoch kann sich der Vorratstopf bis zur selben Füllhöhe wie der Vorratstank entleeren. Wenn der Vorratstopf völlig leer ist, so muß im Vorratstank bei einer Erstbefüllung eine Füllhöhe erreicht werden, die höher ist als der im Vorratstopf angeordnete Endbereich der Leitung, um ein Befüllen des Vorratstopfes aus dem Vorratstank zu ermöglichen. Um eine möglichst große Restfüllmenge im Vorratstopf sicherzustellen muß der Endbereich der Leitung möglichst hoch angeordnet sein, was jedoch dazu führt, daß zum Befüllen des Vorratstopfes aus dem Vorratstank eine große Füllhöhe und damit eine große Füllmenge erforderlich ist.

Durch die US-A-4 750 522 ist darüberhinaus eine Einrichtung zum Fördern von Kraftstoff aus einem Vorratstank zur Brennkraftmaschine eines Kraftsfahrzeugs bekannt, mit einem saugseitig mit dem Vorratstank und druckseitig mit der Brennkraftmaschine verbundenen Förderaggregat. Es ist eine Rückführleitung vorhanden, die zu einer nahe dem Boden des Vorratstanks angeordneten Strahlpumpe führt, die den Kraftstoffüberschuß über einen Mischbereich in einen Vorratstopf fördert, aus welchem das Förderaggregat Kraftstoff entnimmt. Der Mischbereich mündet in einer Öffnung in einer Seitenwand des Vorratstopfes in den Vorratstopf. Die Öffnung ist mittels eines im Vorratstopf angeordneten Schließelements verschließbar, um ein Entleeren des Vorratstopfes zu vermeiden, wenn die Füllhöhe im Vorratstank geringer ist als im Vorratstopf. Durch das Schließelement ist jedoch nicht unter allen Umständen ein sicheres Verschließen der Öffnung möglich; insbesondere bei Schieflage des Vorratstopfes kann das Schließelement von der Öffnung abheben, so daß der Vorratstopf leerlaufen kann.

### Vorteile der Erfindung

Die erfindungsgemäße Fördereinrichtung mit den Merkmalen gemäß Anspruch 1 hat demgegenüber den Vorteil, daß ein sicheres Verschließen der Öffnung des Vorratstopfes mittels des Schließelements möglich ist. Durch die siphonartige Ausbildung des Mischbereichs ist die Anordnung der Öffnung im Boden des Vorratstopfes ermöglicht und damit das sichere Verschließen der Öffnung. Die Anordnung der Trennwand des Mischbereichs zumindest annähernd in der Ebene der Öffnung im Boden des Vorratstopfes ermöglicht eine Befüllung des Vorratstopfes aus dem Vorratstank bereits bei geringer Füllhöhe im Vorratstank.

Nach einer weiteren Ausgestaltung der Erfindung ist vorgesehen, daß in der Öffnung im Übergangsbereich ein Filterelement angeordnet ist. Dadurch kann der im frischen Kraftstoff mitgeführte Schmutz zurückgehalten werden, wodurch nur gefilterter Kraftstoff in den Vorratstopf gelangen kann. Dies hat den Vorteil, daß ein Verstopfen des Vorfilters von dem Förderaggregat verhindert werden kann und das Förderaggregat eine längere Lebensdauer aufweisen kann.

Nach einer weiteren vorteilhaften Ausgestaltung der Erfindung ist vorgesehen, daß die Öffnung im Übergangsbereich eine Dichtfläche aufweist. Dadurch kann eine Vereinfachung in der Herstellung und eine Reduzierung der Bauteile gegeben sein. Das Schließelement kann somit unmittelbar an der Dichtfläche anliegen und den Vorratstopf mit Sicherheit schließen und gegen Leerlaufen schützen. Vorteilhafterweise ist die Dichtfläche bzw. das Dichtelement in dem Übergangsbereich integriert.

Nach einer weiteren vorteilhaften Ausgestaltung der Erfindung ist vorgesehen, daß das Filterelement einstückig mit der Öffnung ausgebildet ist und daß das Schließelement axial zur Öffnung bewegbar im Filterelement anordenbar ist. Durch diese Anordnung kann die Anzahl der Bauteile weiter reduziert werden, wodurch auch eine Kosteneinsparung durch eine Montagevereinfachung gegeben sein kann. Das Schließelement kann einfach in das Filterelement eingesetzt werden und durch eine Klipsverbindung mit einem Verschlußelement zu dem Filterelement festlegbar sein, so daß eine schnelle und einfache Ausbildung und Montage gegeben sein kann.

Nach einer weiteren vorteilhaften Ausgestaltung der Erfindung ist vorgesehen, daß die Öffnung im Übergangsbereich mit einem kugelförmigen Schließelement verschließbar und in einem käfigartig ausgebildeten Filterelement zur Öffnung anordenbar ist. Diese alternative Ausgestaltung weist im Vergleich zu dem zuvor beschriebenen Schließelement den weiteren Vorteil auf, daß eine einfache und kostengünstige Ausgestaltung vorgesehen sein kann. Das käfigartige Filterelement kann eine Doppelfunktion übernehmen. Zum einen sichert dies die Positionierung des kugelförmigen Schließelementes zu der Öffnung. Zum anderen kann das Filterelement den von dem in den Vorratstopf strömenden Kraftstoff mitgeführten Schmutz zurückhalten.

In den weiteren Unteransprüchen sind vorteilhafte Weiterbildungen und Verbesserungen des Hauptanspruchs angegeben.

### Zeichnung

Ausführungsbeispiele der Erfindung sind in der Zeichnung dargestellt und in der nachfolgenden Beschreibung näher erläutert. Es zeigen:
- Fig. 1: eine unmaßstäbliche schematische Darstellung einer Fördereinrichtung in einem Kraftstofftank mit einem siphonartig ausgebildeten Mischbereich,
- Fig. 2: eine vergrößerte schematische im Schnitt dargestellte Teilansicht einer alternativen Ausführungsform zu Fig. 1 und
- Fig. 3: eine schematisch im Querschnitt dargestellte Teilansicht einer weiteren alternativen Ausführungsform zu Fig. 2.

### Beschreibung des Ausführungsbeispiels

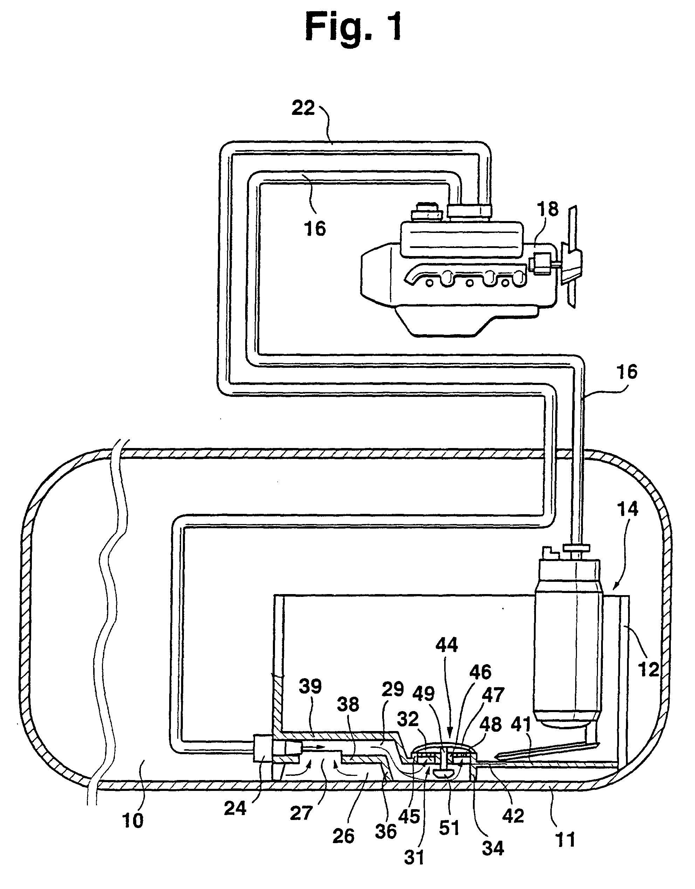

Eine in Fig. 1 dargestellte Einrichtung zum Fördern von Kraftstoff weist einen Vorratstopf 10 auf, in dessen inneren Raum eine separierte behälterartige Kammer 12 untergebracht ist. Die separate Kammer 12 ist topfförmig ausgebildet und in diesem Vorratstopf 12 ist ein Förderaggregat 14 angeordnet, das einen elektrischen Antriebsmotor und einen in einem gemeinsamen Gehäuse untergebrachten Pumpenteil umfaßt. Das Förderaggregat 14 saugt aus dem Vorratstopf 12 Kraftstoff und drückt diesen über eine Förderleitung 16 zur Brennkraftmaschine 18 eines nicht näher dargestellten Kraftfahrzeuges. In der Förderleitung 16 kann ein Rückschlagventil untergebracht sein. Da das Förderaggregat 14 mehr Kraftstoff für die Brennkraftmaschine 18 bereitstellt, als diese verbrauchen kann, führt eine Rückführleitung 22 den Kraftstoffüberschuß wieder zurück in den Tank 10. Am Ende der Rückführleitung 22 ist eine Strahlpumpe 24 angeordnet, die den zurückströmenden Kraftstoff in den Vorratstopf 12 führt.

Im unteren Bereich des Vorratstopfes 12 nahe einem Tankboden 11 ist ein Tankraum 26 vorgesehen, der zu dem Kraftstofftank 10 hin offen ausgebildet ist. Über eine Öffnung 27 kann frischer Kraftstoff aus dem Vorratstopf 12 in einen Mischbereich 29 gelangen. Nahe der Öffnung 27 ist ebenso die Strahlpumpe 24 vorgesehen. Der überschüssige Kraftstoff, der über die Rückführleitung 22 zurückgeführt wird, strömt direkt in den Mischbereich 29 ein und saugt somit nach dem Venturi-Prinzip frischen Kraftstoff aus dem Tankraum 26 an, so daß ein Gemisch aus frischem und zurückgeführtem Kraftstoff in dem Mischbereich 29 vorliegt. Am Ende des Mischbereiches 29 in Strömungsrichtung gesehen ist im Übergangsbereich 31 zwischen dem Mischbereich 29 und dem Innenraum des Vorratstopfes 12 eine Öffnung 32 vorgesehen. Durch diese Öffnung 32 strömt das Gemisch aus dem Mischbereich 29 in den Innenraum des Vorratstopfes 12.

Der Mischbereich 29 ist siphonartig ausgebildet. Dabei sind im Übergangsbereich 31 sich auf dem Tankboden 11 abstützende Wandabschnitte 34 und 36 vorgesehen, die den Übergangsbereich 31 gegenüber dem Tankboden 11 abschließen. Der Wandabschnitt 36 geht in einen horizontalen Abschnitt 38 über, der eine Trennwand zwischen dem Mischbereich 29 und dem Tankraum 26 bildet. Parallel dazu verläuft eine Bodenwand 39 des Vorratstopfes 12. Dadurch kann der Mischbereich 29 siphonartig ausgebildet sein. Die Bodenwand 39 des Vorratstopfes 12 ist stufenförmig ausgebildet und weist einen Abschnitt 41 auf, der in einer Ebene 42 liegt. In dieser Ebene 42 ist ebenfalls die Trennwand 38 des Mischbereiches 29 bzw. des Tankraums 26 angeordnet. Dadurch kann eine Erstbefüllung ermöglicht sein und eine geringe Menge an Kraftstoff, wie beispielsweise fünf Liter, in den Vorratstopf 12 gelangen, damit ein Anlauf des Förderaggregats 14 ermöglicht ist. Es kann ebenso vorgesehen sein, daß der Abschnitt 41 teilweise unterhalb oder unterhalb der Ebene 42 liegen kann.

Das Kraftstoffgemisch im Mischbereich 29 gelangt über die Öffnung 32, die ebenfalls in der Ebene 42 angeordnet ist, in den Vorratstopf 12. Diese Öffnung 32 ist durch ein Schließelement 44 verschließbar. Das Schließelement 44 ist pilzförmig ausgebildet und axial über eine in der Öffnung 32 angeordnete Führung 46 bewegbar aufgenommen. Durch die pilzförmige oder auch flach oder deckelförmige Ausbildung des Schließelementes 44 können die Randbereiche des Schließelementes 44 an der Öffnung 32 anliegen. Der durch den in dem Vorratstopf 12 vorhandenen Kraftstoff vorliegende Kraftstoffdruck bewirkt, daß das Schließelement 44 gegen die Öffnung 32 gedrückt wird und das Schließelement 44 in einer Schließstellung angeordnet ist. Nahe dem Randbereich der Öffnung 32 ist eine Dichtfläche bzw. ein Dichtungselement 45 vorgesehen. Dies kann als Einsetzteil vorgesehen sein. Vorteilhafterweise ist jedoch vorgesehen, daß das Dichtungselement 45 einstückig in dem Randbereich ausgebildet ist.

In der Öffnung 32 ist ein Filterelement 48 vorgesehen, das den mitgeführten Schmutz filtriert, so daß nur sauberer Kraftstoff in den Vorratstopf 12 gelangen kann, um über das Förderaggregat 14 zur Brennkraftmaschine 18 gefördert zu werden. Das Filterelement 48 kann vorteilhafterweise einstückig mit dem Vorratstopf 12 ausgebildet sein. Ebenso kann vorgesehen sein, daß dieses als separates Teil in die Öffnung eingesetzt wird. Das Filterelement 48 weist in seiner Mittelachse eine Führung 46 auf, in der ein die Kappe 47 aufnehmender Zapfen 49 des Schließelementes 44 axial bewegbar aufgenommen ist. Der Kappe 47 gegenüberliegend ist ein Verschlußelement 51 angeordnet, das den axialen Hub des Schließelementes 44 begrenzt. Dieses weist vorteilhafterweise einen Hubweg von in etwa 1 bis 2 mm auf. In Abhängigkeit der Anwendung kann dieser größer oder kleiner gewählt werden.

Sobald die Brennkraftmaschine 18 in Betrieb genommen wird und das Förderaggregat 14 in dem Benzineinspritzsystem einen Förderdruck aufbaut, wird der zuviel geförderte Kraftstoff über die Rückführleitung 22 zurückgeführt und gelangt über die Strahlpumpe 24 in den Mischbereich 29. Wie bereits ausgeführt, wird der rückgeführte Kraftstoff mit frischem Kraftstoff aufgrund des Venturi-Prinzips vermischt, wobei sich durch die Rückführung in dem Mischbereich 29 ein Druck aufbaut, der bewirkt, daß das Schließelement 44 geöffnet wird und das Kraftstoffgemisch in den Vorratstopf 12 strömen kann.

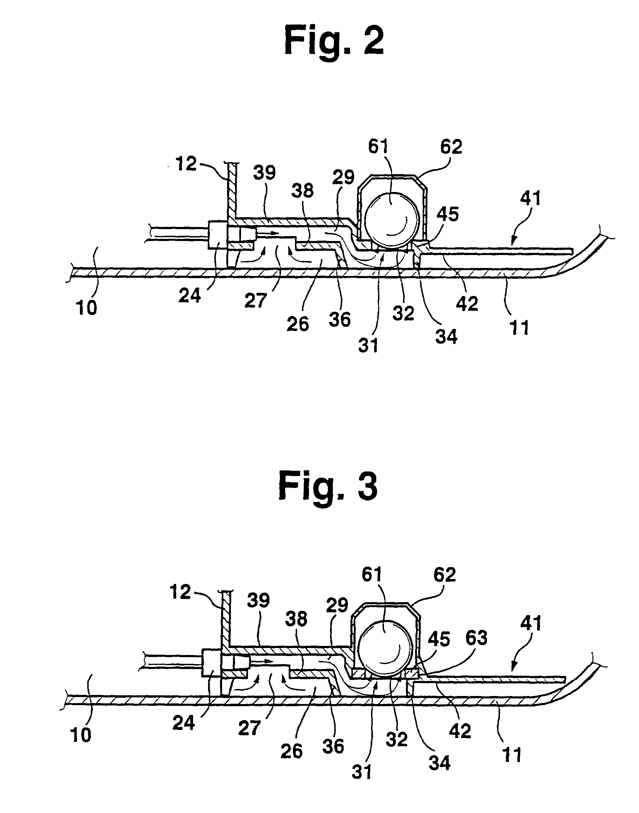

In Fig. 2 ist eine vergrößerte Teilansicht im Querschnitt einer alternativen Ausführungsform zu Fig. 1 dargestellt. Im folgenden werden nur die gegenüber Fig. 1 abweichenden Komponenten beschrieben. Die Öffnung 32 ist durch ein kugelförmiges Schließelement 61 verschließbar. Dieses wird durch ein zur Öffnung 32 positionierbares, käfigartiges Filterelement 62 in seiner Position gehalten. Das Filterelement 62 ist derart ausgebildet, daß das kugelförmige Schließelement 61 vorteilhafterweise einen maximalen Hubweg von in etwa 1 bis 2 mm ausführen kann. Die Abmessungen des Filterelementes 62 sichern eine Positionierung des kugelförmigen Schließelementes 61 zur Öffnung 32. Das Filterelement 62 kann durch eine Rast-, Schnapp- oder Klemmverbindung zur Öffnung 32 positionierbar sein. Durch das Filterelement 62 kann nur gefilterter Kraftstoff in den Vorratstopf 12 gelangen. Das Dichtungselement 45 ist vorteilhafterweise direkt an die Öffnung 32 angeformt. Somit kann eine Einrichtung zum Fördern von Kraftstoff geschaffen sein, die eine geringe Anzahl von Bauelementen aufweist, wodurch eine Einsparung von Produktions- und Montagekosten gegeben ist.

Eine alternative Ausführungsform zu Fig. 2 ist in Fig. 3 dargestellt. In Abweichung zu Fig. 2 ist bei dieser Ausführungsform das käfigartige Filterelement 62 einstückig mit der Bodenwand 39 ausgebildet. Dabei ist ebenfalls vorgesehen, daß das Filterelement 62 Kraftstoff filtert und das Schließelement zur Öffnung 32 positioniert. Nachdem das Schließelement 61 in dem Filterelement 62 positioniert ist, wird ein Dichtungselement 45 in eine Aufnahme 63 des Übergangsbereichs 31 eingesetzt und bildet die Öffnung 32. Das Dichtungselement 45 kann über eine einfache Rast-, Schnapp- oder Klemmverbindung in der Aufnahme 63 vorgesehen sein.

Für die Schließelemente 44, 61 und Filterelemente 48, 62 können geeignete Materialien vorgesehen sein, die durch den Kraftstoff in ihrer Beschaffenheit und Form nicht beeinflußt werden.

Durch die flache und siphonartige Anordnung und Ausbildung des Mischbereiches 29 kann sichergestellt sein, daß bei einer Erstbefüllung, die beispielsweise fünf Liter Kraftstoff umfaßen kann, ein Einströmen des Kraftstoffes in den Vorratstopf 12 durch die Siphonwirkung sichergestellt sein kann. Ein nachträgliches Entleeren kann somit verhindert werden. Dadurch kann eine besonders wichtige Kundenanforderung mit den vorliegenden Ausführungsformen zufriedenstellend gelöst werden. Darüber hinaus ist durch die geringe Anzahl der Bauteile eine kostengünstige Anordnung hinsichtlich der Produktion und Montage gegeben, die desweiteren eine platzsparende Anordnung aufweist, wodurch der Tankinhalt bei gleichbleibendem Tankvolumen größer sein kann.

## Patentansprüche

1. Einrichtung zum Fördern von Kraftstoff aus einem Vorratstank (10) zur Brennkraftmaschine (18) eines Kraftfahrzeuges, mit einem saugseitig mit dem Vorratstank (10) und druckseitig mit der Brennkraftmaschine (18) verbundenen Förderaggregat (14) und einer Rückführleitung (22), die zu einer nahe einem Boden (11) des Vorratstanks (10) angeordneten Strahlpumpe (24) führt, die den Kraftstoffüberschuß über einen Mischbereich (29) in einen im Vorratstank (10) angeordneten Vorratstopf (12) fördert, aus welchem das Förderaggregat (14) Kraftstoff entnimmt, **dadurch gekennzeichnet, daß** der Mischbereich (29) zwischen dem Vorratstopf (12) und dem Boden (11) des Vorratstanks (10) siphonartig ausgebildet ist, daß der Mischbereich (29) in einem Übergangsbereich (31) zum Vorratstopf (12) in einem Boden (41) des Vorratstopfes (12) eine Öffnung (32) in den Vorratstopf (12) aufweist, die mit einem Schließelement (44;61) verschließbar ist und daß der Mischbereich (29) an seinem strahlpumpenseitigen Eingang durch eine Trennwand (38) vom Vorratstank (10) getrennt ist, die in der gleichen Ebene (42) liegt wie die Öffnung (32) im Boden (41) des Vorratstopfes (12).

2. Einrichtung nach Anspruch 1, **dadurch gekennzeichnet, daß** in der Öffnung (32) des Vorratstopfes (12) ein Filterelement (48, 62) angeordnet ist.

3. Einrichtung nach Anspruch 1 oder 2, **dadurch gekennzeichnet, daß** die Öffnung (32) im Übergangsbereich (31) ein Dichtungselement (45) aufweist, das vorzugsweise durch den Übergangsbereich (31) ausgebildet ist.

4. Einrichtung nach einem der vorhergehenden Ansprüche, **dadurch gekennzeichnet, daß** die im Übergangsbereich (31) parallel zum Tankboden (11) verlaufende Öffnung (32) ein integriertes Filterelement (48) aufweist, welches das Schließelement (44) axial zur Öffnung (32) bewegbar aufnimmt.

5. Einrichtung nach Anspruch 4, **dadurch gekennzeichnet, daß** das Schließelement (44) pilzförmig oder flach ausgebildet ist und mit einem entlang der Längsachse der Öffnung (32) bewegbaren Zapfen (49) in einer Führung (46) des Filterelementes (48) bewegbar ist.

6. Einrichtung nach einem der Ansprüche 1 bis 3, **dadurch gekennzeichnet, daß** die Öffnung (32) im Übergangsbereich (31) mit einem kugelförmigen Schließelement (61) verschließbar ist, das in einem käfigartig ausgebildeten Filterelement(62) zur Öffnung (32) positioniert ist.

7. Einrichtung nach Anspruch 6, **dadurch gekennzeichnet, daß** das Filterelement (62) in einer Bodenwand (39) des Vorratstopfes (12) integriert ist und die Öffnung (32) durch ein in eine Aufnahme (63) des Übergangsbereiches (31) einsetzbares Dichtungselement (45) ausgebildet ist.

8. Einrichtung nach Anspruch 6, **dadurch gekennzeichnet, daß** das käfigartig ausgebildete Filterelement (62) nach dem Einsetzen des Schließelementes (61) zur Öffnung (31) anordenbar ist.

9. Einrichtung nach einem der vorhergehenden Ansprüche, **dadurch gekennzeichnet, daß** die Strahlpumpe (24) im Mischbereich (29) nahe einer Öffnung (27) eines Tankraums (26) angeordnet ist und daß nach dem Venturi-Prinzip frischer Kraftstoff aus dem Vorratstopf (12) in den Mischbereich (29) zuführbar ist.

## Claims

1. Device for feeding fuel out of a storage tank (10) to the internal-combustion engine (18) of a motor vehicle, having a feed unit (14), which on the suction side is connected to the storage tank (10) and on the delivery side is connected to the internal-combustion engine (18), and a return line (22), which leads to a jet pump (24) which is arranged close to a base (11) of the storage tank (10) and feeds the excess fuel, via a mixing region (29), into a storage pot (12) which is arranged in the storage tank (10) and from which the feed unit (14) removes fuel, **characterized in that** the mixing region (29) is formed in the manner of a siphon between the storage pot (12) and the base (11) of the storage tank (10), **in that** the mixing region (29), in a transition region (31) to the storage pot (12), in a base (41) of the storage pot (12), has an opening (32) leading into the storage pot (12), which opening can be closed off by means of a closure element (44; 61), and **in that** the mixing region (29), at its jet-pump-side entrance, is separated from the storage tank (10) by a partition (38) which lies at the same level (42) as the opening (32) in the base (41) of the storage pot (12).

2. Device according to Claim 1, **characterized in that** a filter element (48, 62) is arranged in the opening (32) in the storage pot (12).

3. Device according to Claim 1 or 2, **characterized in that** the opening (32) in the transition region (31) has a seal element (45), which is preferably formed by the transition region (31).

4. Device according to one of the preceding claims, **characterized in that** the opening (32), which runs parallel to the tank base (11) in the transition region (31), has an integrated filter element (48) which accommodates the closure element (44) in such a manner that it can move axially with respect to the opening (32).

5. Device according to Claim 4, **characterized in that** the closure element (44) is of mushroom-shaped or flat design and, by means of a pin (49) which can move along the longitudinal axis of the opening (32), can be moved in a guide (46) of the filter element (48).

6. Device according to one of Claims 1 to 3, **characterized in that** the opening (32) in the transition region (31) can be closed off by a closure element (61) which is in the form of a ball and is positioned with respect to the opening (32) in a filter element (62) which is designed in the form of a cage.

7. Device according to Claim 6, **characterized in that** the filter element (62) is integrated in a base wall (39) of the storage pot (12), and the opening (32) is formed through a seal element (45) which can be inserted into a receptacle (63) of the transition region (31).

8. Device according to Claim 6, **characterized in that** the filter element (62), which is of cage-like design, can be positioned with respect to the opening (31) after the insertion of the closure element (61).

9. Device according to one of the preceding claims, **characterized in that** the jet pump (24) is arranged in the mixing region (29) close to an opening (27) of a tank space (26), and **in that** fresh fuel can be supplied from the storage pot (12) to the mixing region (29) using the venturi principle.

## Revendications

1. Installation pour fournir du carburant d'un réservoir (10) à un moteur à combustion interne (18) d'un véhicule automobile, comprenant :
une unité d'alimentation (14) reliée du côté aspiration au réservoir (10) et du côté refoulement, au moteur à combustion interne (18) ainsi qu'une conduite de retour (22) reliée à un pompe à jet (24) prévue à proximité du fond (11) du réservoir (10), cette pompe débitant l'excédent de carburant par l'intermédiaire d'une zone de mélange (29) dans un réservoir intermédiaire (12) placé dans le réservoir (10) et à partir duquel l'unité d'alimentation (14) prend le carburant,
**caractérisée en ce que**
la zone de mélange (29) est réalisée en forme de siphon entre le réservoir intermédiaire (12) et le fond (11) du réservoir (10) et elle (29) comporte une ouverture (32) dans le réservoir intermédiaire (12), dans la zone transitoire (33) vers le réservoir intermédiaire (12) dans le fond (41) de celui-ci,
cette ouverture se fermant à l'aide d'un élément de fermeture (44 ; 61) et
l'entrée de la zone de mélange (29) du côté de la pompe à jet est séparée du réservoir (10) par une cloison (38) située dans le même plan (42) que l'ouverture (32) du fond (41) du réservoir intermédiaire (12).

2. Installation selon la revendication 1,
**caractérisée par**
un élément de filtre (48, 62) placé dans l'ouverture (32) du réservoir intermédiaire (12).

3. Installation selon l'une quelconque des revendications 1 ou 2,
**caractérisée en ce que**
l'ouverture (32) dans la zone transitoire (31) comporte un élément d'étanchéité (45) réalisé de préférence par la zone transitoire (31).

4. Installation selon l'une quelconque des revendications précédentes,
**caractérisée en ce que**
l'ouverture (32) parallèle au fond (11) du réservoir dans la zone transitoire (31) comporte un élément de filtre (48) intégré, qui reçoit l'élément de fermeture (44) de manière mobile, axialement par rapport à l'ouverture (32).

5. Installation selon la revendication 4,
**caractérisée en ce que**
l'élément de fermeture (44) est plat ou en forme de champignon et il comporte une tige (49) mobile dans l'axe longitudinal de l'ouverture (32) dans un guide (46) de l'élément de filtre (48).

6. Installation selon l'une quelconque des revendications 1 à 3,
**caractérisée en ce que**
l'ouverture (32) dans la zone transitoire (31) est fermée par un élément d'obturation (61) en forme de bille placé dans un élément de filtre (62) en forme de cage sur l'ouverture (32).

7. Installation salon la revendication 6,
**caractérisée en ce que**
l'élément de filtre (62) est intégré dans le fond (39) du réservoir intermédiaire (12) et l'ouverture (32) est formée par un élément d'étanchéité (45) qui se place dans un logement (63) de la zone transitoire (31).

8. Installation selon la revendication 6,
**caractérisée en ce que**
l'élément de filtre (62) en formé de cage est installé après la mise en place de l'élément de fermeture (61) par rapport à l'ouverture (31).

9. Installation selon l'une quelconque des revendications précédentes,
**caractérisée en ce que**
la pompe à jet (24) est placée dans la zone de mélange (29), à proximité d'une ouverture (27) du volume (26) du réservoir, et elle fournit, selon le principe du venturi, du carburant frais du réservoir intermédiaire (12) dans la zone de mélange (29).
